# EUROPÄISCHE PATENTSCHRIFT

(11) **EP 3 067 240 B1**
(45) Veröffentlichungstag und Bekanntmachung des Hinweises auf die Patenterteilung: **10.04.2019**
(21) Anmeldenummer: 16000418.0
(22) Anmeldetag: 19.02.2016
(51) Int. Cl.: B60R 16/03, H02J 7/14, B60R 16/033

(54) **VERFAHREN ZUR SPANNUNGSVERSORGUNG EINES BORDNETZES EINES KRAFTFAHRZEUGS**
METHOD FOR VOLTAGE REGULATION OF AN ELECTRICAL SYSTEM OF A MOTOR VEHICLE
PROCEDE D'ALIMENTATION EN TENSION D'UN RESEAU DE BORD D'UN VEHICULE AUTOMOBILE

(30) Priorität: 13.03.2015 DE 102015003231
(43) Veröffentlichungstag der Anmeldung: 14.09.2016
(73) Patentinhaber: MAN Truck & Bus AG, 80995 München (DE)
(72) Erfinder: Soboll, Stefan, 85221 Dachau (DE)
(74) Vertreter: v. Bezold & Partner Patentanwälte - PartG mbB

(56) Entgegenhaltungen:
- EP-A1- 1 595 748
- WO-A1-2012/038031
- WO-A2-2014/154816
- AT-A1- 512 132
- DE-C1- 19 846 319
- JP-A- 2002 218 667

## Beschreibung

Die Erfindung betrifft ein Verfahren zur Spannungsversorgung eines Bordnetzes eines Kraftfahrzeugs, wobei das Bordnetz zwei über einen Gleichspannungswandler gekoppelte Teilnetze umfasst, in denen jeweils ein elektrischer Energiespeicher angeordnet ist.

An dem ersten Teilnetz mit der niedrigeren Nennspannung (z. B. 24 V) sind in der Regel Verbraucher mit niedriger Leistungsaufnahme angeschlossen. An dem zweiten Teilnetz mit der höheren Nennspannung (z. B. 48 V) können neben der elektrischen Maschine zum Antrieb und/oder zur Antriebsunterstützung des Fahrzeugs und dem zweiten Energiespeicher noch weitere Hochleistungsverbraucher angeschlossen sein.

Derartige Bordnetze kommen insbesondere bei Mildhybrid-, Hybrid- und Elektrofahrzeugen zum Einsatz, wobei das Vorsehen der elektrischen Maschine zum Antrieb und/oder zur Antriebsunterstützung des Fahrzeugs in einem separaten Teilnetz bekanntermaßen den Vorteil bietet, dass die elektrische Maschine nicht mit der Spannung eines konventionellen Bordnetzes von z. B. 12V oder 24V betrieben werden muss, sondern mit einer davon unterschiedlichen, in der Regel höheren Betriebsspannung versorgt werden kann. Ferner können die Verbraucher im konventionellen Teilbordnetz vor Spannungsschwankungen, die durch den Betrieb der elektrischen Maschine entstehen, besser geschützt werden.

Ein derartiges Bordnetz ist beispielsweise in der Offenlegungsschrift AT 512 132 A1 offenbart. Hieraus ist auch bekannt, dass Niederspannungsverbraucher im ersten Teilnetz über den Gleichspannungswandler aus dem zweiten Teilnetz versorgt werden können, wahlweise durch einen generatorischen Betrieb der elektrischen Maschine oder direkt aus dem Energievorrat des Energiespeichers im zweiten Teilnetz.

WO 2012/038031 A1 offenbart ein System und Verfahren zum Versorgen elektrisch betriebener Verbraucher für ein Kraftfahrzeug sowie ein Kraftfahrzeug.

Energiespeicher stellen jedoch vergleichsweise teure und schwere Bauteile dar, die ferner einen hohen Bauraumbedarf aufweisen, so dass die bekannten Verfahren zur Spannungsversorgung auf Basis der bekannten Bordnetze und Betriebsverfahren mit entsprechenden Kosten-, Gewichts- und Bauraumnachteilen verbunden sind.

Es ist somit eine Aufgabe der Erfindung, ein verbessertes Verfahren zur Spannungsversorgung eines Bordnetzes bereitzustellen, mit dem Nachteile herkömmlicher Techniken vermieden oder zumindest reduziert werden können.

Diese Aufgaben werden durch ein Verfahren mit den Merkmalen des Hauptanspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die Erfindung beruht auf der technischen Erkenntnis, dass der Energiespeicher im ersten Teilnetz kleiner ausgelegt werden kann, wenn das erste Teilnetz überwiegend aus dem zweiten Teilnetz mit einer Spannung bzw. elektrischer Energie versorgt wird und der erste Energiespeicher nur zur kurzzeitigen Versorgung des ersten Teilnetzes im Fahrbetrieb und/oder zur Versorgung des ersten Teilnetzes bei abgestelltem Fahrzeug verwendet wird. Um zu verhindern, dass sich der erste Energiespeicher, insbesondere wenn dieser verkleinert ausgelegt ist, bei abgestellten Fahrzeug zu stark entlädt, z. B. aufgrund der Selbstentladung des Energiespeichers oder aufgrund eines Ruhestromes im zweiten Teilnetz, wird vorgeschlagen, diesen periodisch oder bei Bedarf durch den zweiten Energiespeicher auch im abgestellten Zustand des Fahrzeugs nachzuladen.

Erfindungsgemäß wird ein Verfahren zur Spannungsversorgung eines Bordnetzes eines Kraftfahrzeugs vorgeschlagen. Das Bordnetz umfasst ein erstes Teilnetz, in dem eine erste Nennspannung anliegt und in dem ein erster Energiespeicher für elektrische Energie sowie mehrere angeschlossene Verbraucher, die einen Lastwiderstand bilden, angeordnet sind. Das Bordnetz umfasst ferner ein zweites Teilnetz, in dem eine zweite Nennspannung anliegt und das eine motorisch und generatorisch betreibbare elektrische Maschine zur Bereitstellung elektrischer Antriebsenergie und einen zweiten Energiespeicher für elektrische Energie umfasst. Der zweite Energiespeicher ist vorzugsweise ein Traktionsenergiespeicher zur Versorgung der elektrischen Maschine mit elektrischer Antriebsenergie, z. B. ein Lithium-Ionen-Akkumulator. Das erste und das zweite Teilnetz sind über einen ersten Gleichspannungswandler miteinander gekoppelt. An das Bordnetz können noch weitere Energiespeicher angeschlossen sein. Ferner kann das Bordnetz noch weitere Teilnetze umfassen, z. B. ein Anhängerbordnetz eines Nutzfahrzeugs.

Gemäß allgemeinen Gesichtspunkten umfasst das Verfahren die folgenden Schritte:
Im Fahrbetrieb des Kraftfahrzeugs wird das erste Teilnetz mit Spannung aus dem zweiten Teilnetz über den ersten Gleichspannungswandler versorgt, wobei der erste Energiespeicher zur Abdeckung von Lastspitzen verwendet werden kann. Die elektrische Energie zur Versorgung des ersten Teilnetzes kann hierbei entweder dem zweiten Energiespeicher entnommen werden oder von der elektrischen Maschine bereitgestellt werden, falls diese sich im generatorischen Betrieb befindet. Mit anderen Worten erfolgt somit die Versorgung des ersten Teilnetzes mit elektrischer Energie, wenn möglich, immer über das zweite Teilnetz. Der erste Energiespeicher dient nur als Puffer bei Lastspitzen, d. h. in Phasen, in denen das zweite Teilnetz nicht ausreichend Energie für das erste Teilnetz bereitstellen kann, oder wenn die Energieversorgung des ersten Teilnetzes durch das zweite Teilnetz gestört ist. Somit wird nur bei Lastspitzen oder in Fällen, in denen kurzfristig keine Energie aus dem zweiten Teilnetz bereitgestellt werden kann, Energie aus dem ersten Energiespeicher zur Bedienung einer Lastanforderung im ersten Teilnetz bereitgestellt, so dass der erste Energiespeicher in der Regel nur kurzzeitig zur Versorgung der Verbraucher im ersten Teilnetz benötigt wird. Dies bietet den Vorzug, dass der erste Energiespeicher für kleinere Energiespeichermengen ausgelegt werden kann und somit als kostengünstigere, leichtere und baulich kompaktere Komponente ausgeführt sein kann.

Im Nicht-Fahrbetrieb des Fahrzeugs, d. h. bei einem abgestellten Fahrzeug, wird das erste Teilnetz mit Spannung über den ersten Energiespeicher versorgt. Bei abgestelltem Fahrzeug ist die Lastanforderung der Bordnetzverbraucher in der Regel sehr gering im Vergleich zum Fahrbetrieb.

Ferner erfolgt ein Nachladen des ersten Energiespeichers mit Energie aus dem zweiten Energiespeicher, wobei das Nachladen des ersten Energiespeichers periodisch erfolgt und/oder dann erfolgt, wenn ein überwachter Parameter, der ein Maß für den Ladezustand des ersten Energiespeichers ist, ein Unterschreiten eines vorgegebenen Mindestladezustands des ersten Energiespeichers anzeigt.

Insbesondere erfolgt dieses Nachladen des ersten Energiespeichers auch im Nicht-Fahrbetrieb, d. h. bei abgestelltem Fahrzeug. Dadurch kann bei längeren Standzeiten des Fahrzeugs eine zu starke Selbstentladung des Energiespeichers oder eine zu starke Entladung durch Ruheströme im ersten Teilnetz vermieden werden, insbesondere wenn der erste Energiespeicher nur für kleinere Energiespeichermengen ausgelegt ist. Eine zu starke Entladung kann dazu führen, dass ein Starten der Steuergeräte des Fahrzeugs oder ein Starten des Fahrzeugs, falls der Starter im ersten Teilnetz angeordnet ist, nicht mehr möglich ist. Eine zu starke Entladung kann sich ferner negativ auf die Lebensdauer des ersten Energiespeichers auswirken.

Unter dem Begriff "Nicht-Fahrbetrieb" wird ein Zustand des Fahrzeugs verstanden, bei dem das Fahrzeug abgestellt oder geparkt ist, d. h. ein Zustand, bei dem die Antriebsmotoren und die Zündung ausgeschaltet sind. In diesem Zustand sind das zweite Teilnetz und der Gleichspannungswandler in der Regel deaktiviert.

Das Abstellen des Fahrzeugs kann beispielsweise durch das Verriegeln des Fahrzeugs, das Ausschalten der Zündung und/oder durch andere geeignete Parameter erkannt werden, aus denen abgeleitet werden kann, dass der Fahrer das Fahrzeug abgestellt hat und wahrscheinlich ein erneuter Fahrbetrieb nicht unmittelbar bevorsteht.

Erfindungsgemäß werden zum Nachladen des ersten Energiespeichers im Nicht-Fahrbetrieb der erste Gleichspannungswandler und das zweite Teilnetz kurzzeitig für den Nachladevorgang aktiviert. Wie vorstehend bereits erwähnt, sind im Nicht-Fahrbetrieb das zweite Teilnetz, die darin befindliche Komponenten und der erste Gleichspannungswandler normalerweise deaktiviert. Um jedoch für das Nachladen Energie aus dem zweiten Energiespeicher zum ersten Energiespeicher transferieren zu können, müssen der Gleichspannungswandler und das zweite Teilnetz für die Zeit des Energietransfers aktiviert werden, inklusive der hierfür benötigten Steuergeräte, z. B. das Steuergerät zur Ansteuerung des ersten Gleichspannungswandlers. Diese Variante bietet den Vorteil, dass keine zusätzlichen Komponenten notwendig sind, um ein Nachladen des ersten Energiespeichers auch bei abgestelltem Fahrzeug zu ermöglichen. Ein Nachteil dieser Variante ist jedoch, dass die Aktivierung des zweiten Teilnetzes und des Gleichspannungswandlers die an das zweite Teilnetz angeschlossenen Komponenten unter eine Spannung setzt und diese einen Strom aufnehmen können. Dies stellt eine mögliche Gefahrenquelle dar, insbesondere dann, wenn die Nennspannung im zweiten Teilnetz eine Hochspannung ist.

Diese Nachteile können vermieden werden, wenn das Nachladen im Nicht-Fahrbetrieb gemäß einem zweiten, nicht beanspruchten Ausführungsbeispiel erfolgt. Gemäß dem zweiten Ausführungsbeispiel ist der zweite Energiespeicher über einen zweiten Gleichspannungswandler direkt mit dem ersten Energiespeicher verbindbar, wobei zum Nachladen des ersten Energiespeichers im Nicht-Fahrbetrieb der zweite Gleichspannungswandler aktiviert wird, um den ersten Energiespeicher über den zweiten Gleichspannungswandler direkt mit dem zweiten Energiespeicher zu verbinden und mit Energie aus dem zweiten Energiespeicher zu versorgen.

Gemäß dieser Variante wird der Nachladestrom aus dem zweiten Energiespeicher nicht über das zweite Teilnetz und den ersten Gleichspannungswandler in das erste Teilnetz, sondern über den zweiten Gleichspannungswandler und eine Leitung, die den zweiten Gleichspannungswandler direkt mit dem ersten Energiespeicher verbindet, geleitet, so dass der erste Gleichspannungswandler und das zweite Teilnetz für den Nachladevorgang nicht aktiviert werden müssen und vorzugsweise auch nicht aktiviert werden.

Bei einer vorteilhaften Variante dieses Ausführungsbeispiels ist der zweite Gleichspannungswandler am zweiten Energiespeicher angeordnet und/oder in den zweiten Energiespeicher baulich integriert. Diese Variante bietet den Vorzug, dass die zweite Nennspannung, die vorzugsweise höher als die erste Nennspannung ist, während des Nachladevorgangs in dem zweiten Energiespeicher gekapselt bleibt, da die Ladespannung durch den zweiten Gleichspannungswandler direkt am zweiten Energiespeicher auf die Ladespannung des ersten Energiespeichers bzw. die Nennspannung des ersten Teilnetzes gewandelt wird.

Der zweite Gleichspannungswandler kann leistungsmäßig kleiner als der erste Gleichspannungswandler ausgelegt sein, da über ihn in der Regel nur die Ruheströme im ersten Teilnetz und die Selbstentladung des ersten Energiespeichers ausgeglichen werden müssen. Dadurch kann der zweite Gleichspannungswandler kostengünstig ausgeführt sein.

Gemäß einem weiteren Aspekt der Erfindung kann das Kraftfahrzeug ein Mildhybrid-, Hybrid- oder ein Elektrofahrzeug sein. Die Nennspannung im ersten Teilnetz kann z. B. 12 V (PKWs) oder 24 V (Nutzfahrzeuge) betragen. Die Nennspannung des zweiten Teilnetzes ist vorzugsweise größer als die Nennspannung des ersten Teilnetzes und kann beispielsweise 48 V betragen oder eine Hochvoltspannung sein. Die konkrete Ausführung der Spannungslagen der beiden Teilnetze ist jedoch für die Ausführung der Erfindung nicht von Bedeutung.

Die Speicherkapazität des ersten Energiespeichers ist vorzugsweise kleiner als die des zweiten Energiespeichers. Der erste Energiespeicher kann eine Blei-Säure-Batterie bzw. ein Bleiakkumulator sein. Es wird jedoch betont, dass auch andere Speichertypen für den ersten Energiespeicher möglich sind, da das erfindungsgemäße Verfahren eine kleinere Auslegung des Speichers im ersten Teilnetz ermöglicht.

Ein weiterer Aspekt der Erfindung betrifft ein Kraftfahrzeug, insbesondere ein Nutzfahrzeug, aufweisend ein Bordnetz, wie vorstehend beschrieben, und eine Steuereinrichtung, die eingerichtet ist, das Verfahren zur Spannungsversorgung des Bordnetzes, wie hierin offenbart, auszuführen.

Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Bordnetzes mit zwei Teilnetzen;
- Figur 2: ein schematisches Blockschaltbild eines Bordnetzes mit zwei Teilnetzen und einem zusätzlichem Gleichspannungswandler gemäß einer nicht beanspruchten Ausführungsform;
- Figuren 3A und 3b: ein Verfahren zur Spannungsversorgung des ersten Teilnetzes durch das zweite Teilnetz bei einem Fahrbetrieb des Fahrzeugs gemäß einer Ausführungsform der Erfindung;
- Figur 4: ein Verfahren zur Spannungsversorgung des ersten Teilnetzes im Nicht-Fahrbetrieb des Fahrzeugs gemäß einer Ausführungsform der Erfindung;
- Figur 5A: ein Nachladen des Energiespeichers im ersten Teilnetz im Nicht-Fahrbetrieb gemäß einer Ausführungsform der Erfindung; und
- Figur 5B: ein Nachladen des Energiespeichers im ersten Teilnetz im Nicht-Fahrbetrieb gemäß einer weiteren Ausführungsform.

Gleiche oder äquivalente Komponenten sind in allen Figuren mit den gleichen Bezugszeichen bezeichnet.

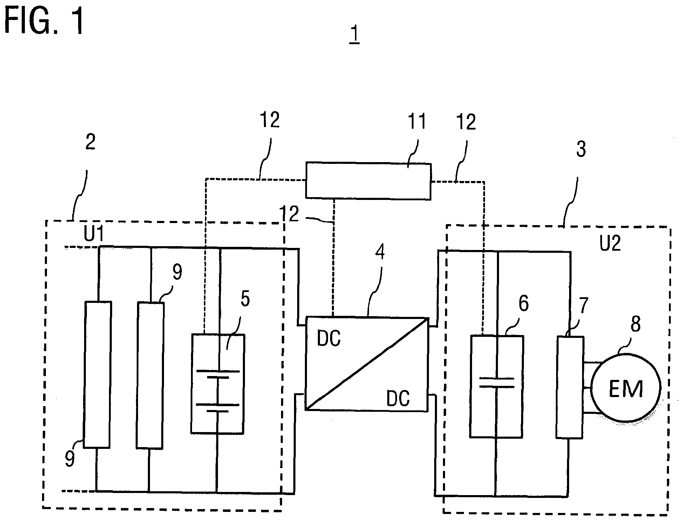

Figur 1 zeigt schematisch ein Ausführungsbeispiel für ein Bordnetz 1 eines Fahrzeugs, insbesondere eines Nutzfahrzeugs. Das Bordnetz 1 weist in an sich bekannter Weise zwei Teilnetze 2, 3 auf:
Das erste Teilnetz 2, in dem eine erste Netzspannung U1, z. B. 24 V, anliegt, umfasst einen ersten Energiespeicher 5, z. B. in Form einer Blei-Säure-Batterie, und einen Lastwiderstand. Der Lastwiderstand ist durch wenigstens einen, in der Regel durch mehrere Verbraucher 9 gebildet. Die Verbraucher in dem ersten Teilnetz 2 benötigen eine konstante Versorgungsspannung.

Das Bordnetz umfasst ferner ein zweites Teilnetz 3, in dem eine zweite Netzspannung U2, z B. 48 V, anliegt und in dem eine generatorisch und elektromotorisch betreibbare elektrische Maschine 8, z. B. ein Startergenerator, vorgesehen ist, die über einen Inverter 7 an das Teilnetz 3 angeschlossen ist. Die elektrische Maschine 8 stellt im motorischen Betrieb eine Antriebsleistung für den Triebstrang bereit. Im zweiten Teilnetz 3 ist ferner ein zweiter Energiespeicher 6 vorgesehen. Der zweite Energiespeicher 6 ist ausgebildet, von der elektrischen Maschine 8 in dem Generatorbetrieb bzw. Rekuperationsbetrieb erzeugte elektrische Ladung zu speichern. Im motorischen Betrieb wird die elektrische Maschine 8 mit elektrischer Energie aus dem Energiespeicher 6 versorgt. Der Energiespeicher 6 kann beispielsweise als Li-Ionen-Akkumulator ausgebildet sein. Im zweiten Teilnetz 3 können optional ferner ebenfalls ein oder mehrere Verbraucher (nicht dargestellt) angeschlossen sein. Die beiden Teilnetze 2 und 3 können massegekoppelt sein.

Das Bordnetz 1 umfasst ferner einen Gleichspannungswandler (DC/DC-Wandler) 4, der das erste Teilnetz 2 mit dem zweiten Teilnetz 3 in an sich bekannter Weise koppelt, so dass Energie aus dem zweiten Teilnetz 3 in das erste Teilnetz 2 transferiert werden kann. Der Gleichspannungswandler 4 kann auch bidirektional ausgeführt sein.

Die Steuerung des Bordnetzes 1 wird durch eine Steuerung 11 vorgenommen, die über entsprechende Signal- und Messleitungen 12 mit den entsprechenden Komponenten des Bordnetzes 1 verbunden ist, um die Versorgung des ersten Teilnetzes 2 in der erforderlichen Konstanz sicherzustellen. Ferner ist die Steuerung über Steuerleitungen (nicht gezeigt) mit der elektrischen Maschine 8 verbunden, um deren Leistungsabgabe zu steuern. Die Steuerung kann ferner über Steuerleitungen mit den einzelnen Verbrauchern verbunden sein (nicht gezeigt), um diese bei Bedarf ab- bzw. zuzuschalten.

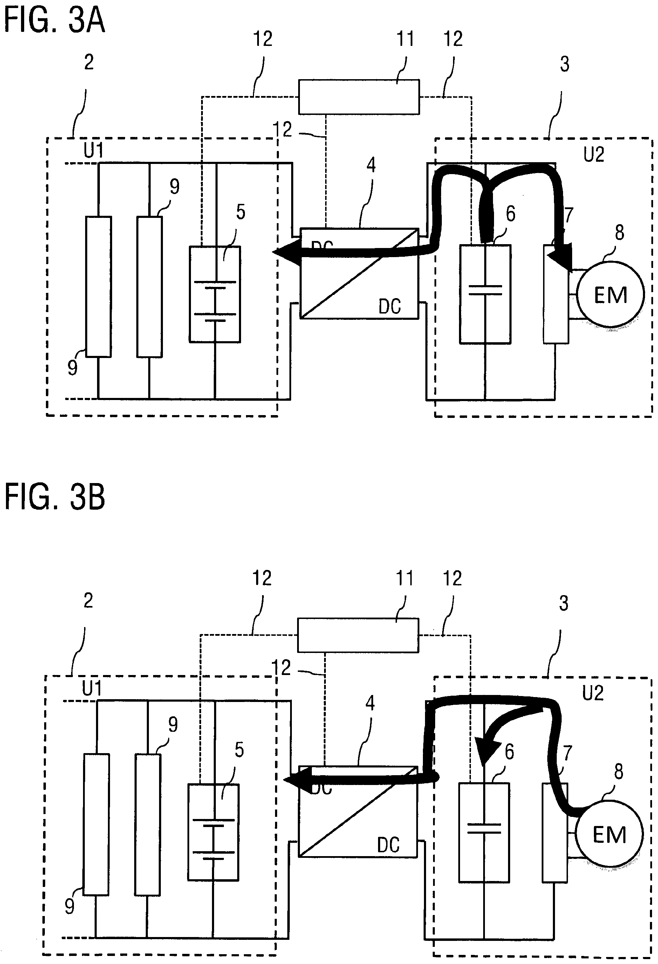

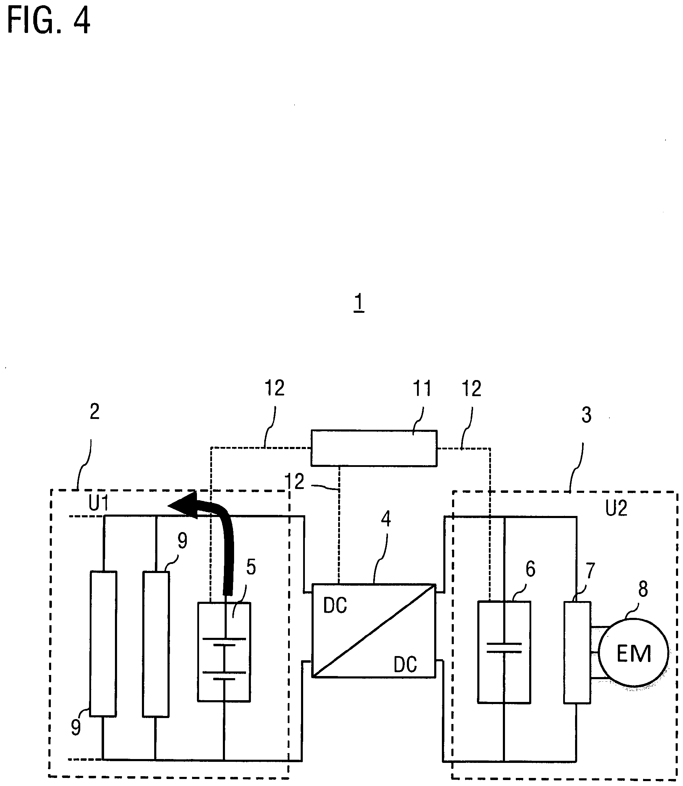

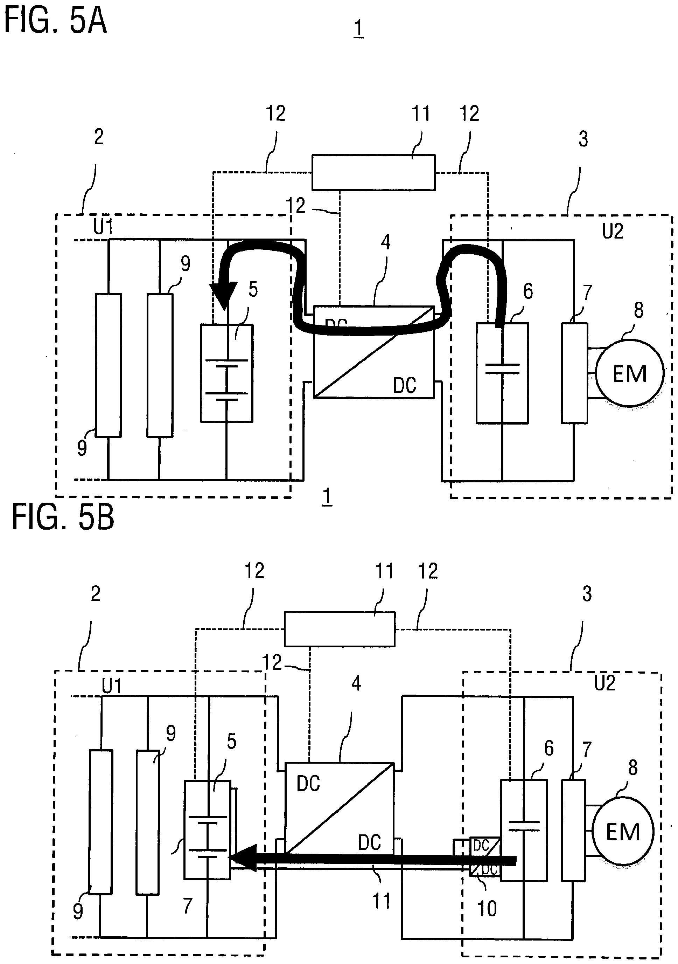

Die Steuereinheit 11 ist insbesondere ausgebildet, die Spannungsversorgung der beiden Teilnetze 2, 3 zu steuern. Befindet sich das Fahrzeug im Fahrbetrieb, wird das erste Teilnetz 2 mit Spannung aus dem zweiten Teilnetz 3 über den Gleichspannungswandler 4 versorgt, der hierzu entsprechend von der Steuereinheit 11 angesteuert wird. Die Versorgung des ersten Teilnetzes im Fahrbetrieb ist in den Figuren 3A und 3B illustriert:
Die elektrische Energie zur Versorgung des ersten Teilnetzes 2 kann hierbei entweder dem zweiten Energiespeicher 6 entnommen werden, was in Figur 3A dargestellt ist, oder von der elektrischen Maschine bereitgestellt werden, falls diese sich im generatorischen Betrieb befindet, was in Figur 3B dargestellt ist. Die fett eingezeichneten Pfeile illustrieren dabei schematisch den Energiefluss, was auch für die Figuren 4, 5A und 5B gilt.

Gemäß der in Figur 3A gezeigten Variante versorgt der Energiespeicher 6 sowohl die elektrische Maschine 8, die sich in einem motorischen Betrieb befindet, mit Energie als auch das erste Teilnetz 2. Gemäß der in Figur 3B gezeigten Variante kann elektrische Energie, die von der Maschine 8 im generatorischen Betrieb erzeugt wurde, sowohl dem Energiespeicher 6 als auch dem ersten Teilnetz zugeführt werden.

Im Fahrbetrieb erfolgt somit die Versorgung des ersten Teilnetzes 2 mit elektrischer Energie, wenn möglich, immer über das zweite Teilnetz 3. Der Energiespeicher 5 im ersten Teilnetz dient nur als Puffer bei Lastspitzen, d. h. in Phasen, in denen das zweite Teilnetz 3 nicht ausreichend Energie für das erste Teilnetz 2 bereitstellen kann, oder wenn die Energieversorgung des ersten Teilnetzes 2 durch das zweite Teilnetz 3 gestört ist. Somit wird nur bei Lastspitzen oder in Fällen, in denen kurzfristig keine Energie aus dem zweiten Teilnetz bereitgestellt werden kann, Energie aus dem ersten Energiespeicher 5 zur Bedienung einer Lastanforderung im ersten Teilnetz bereitgestellt. Der erste Energiespeicher 5 ist somit für vergleichsweise kleine Energiespeichermengen ausgelegt. Der erste Energiespeicher 5 wird im Fahrbetrieb periodisch oder bei Unterschreitung einer Mindestlademenge mit Energie aus dem zweiten Teilnetz 3 wieder aufgeladen.

Im Nicht-Fahrbetrieb, d. h. bei abgestelltem bzw. ausgeschaltetem Antriebsmotor, sind der Spannungswandler 4 und die Steuerung 11 in der Regel deaktiviert. Im Nicht-Fahrbetrieb kann das erste Teilnetz bei einer Lastanforderung mit Spannung über den ersten Energiespeicher 5 versorgt werden, was in Figur 4 dargestellt ist. Ein Beispiel für eine solche Lastanforderung kann das Starten der Steuergeräte zur Wiederaufnahme eines Fahrbetriebs oder ein Starten eines Startermotors sein, der im ersten Teilnetz angeordnet sein kann.

Ferner wird im abgestellten Zustand der Ladezustand des ersten Energiespeichers überwacht. Fällt der Ladezustand des ersten Energiespeichers 5 unter einen vorbestimmten Schwellenwert für den Mindestladezustand, z. B. aufgrund eines Ruhestromes im ersten Teilnetz 2 oder aufgrund einer Selbstentladung des Energiespeichers 5, wird ein Nachladevorgang gestartet. Hierbei wird im Nicht-Fahrbetrieb der erste Energiespeicher 5 mit Energie aus dem zweiten Energiespeicher 6 wieder aufgeladen.

Eine erste Möglichkeit zur Durchführung des Nachladevorgangs ist in Figur 5A dargestellt. Im Nicht-Fahrbetrieb müssen gemäß der in Figur 5A gezeigten Variante das Steuergerät 11 und der Gleichspannungswandler 4 während der Dauer des Nachladevorgangs aktiviert werden, so dass Energie von dem zweiten Energiespeicher 6 in den ersten Energiespeicher 5 fließen kann.

Die benötigten Energiemengen im abgestellten Zustand sind typischerweise recht klein, so dass die Abstände zum Nachladen trotz geringer Kapazität des ersten Energiespeichers 5 groß ausfallen können und die Nachladezeiten trotzdem kurz sind.

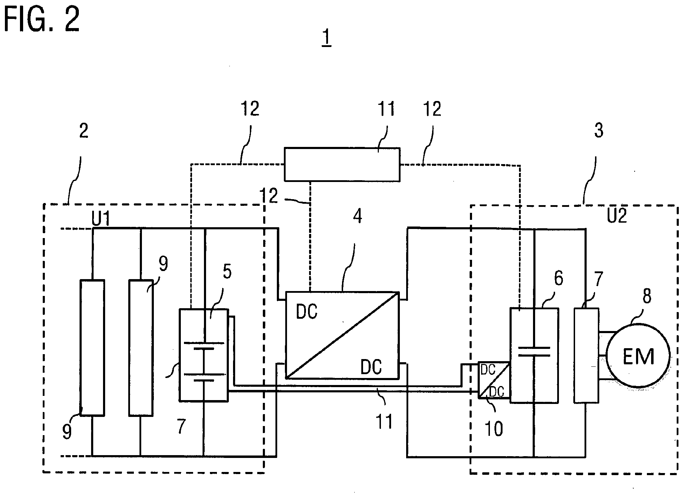

In Figur 2 ist eine weitere Ausführungsform des Bordnetzes 1 gezeigt. Die Besonderheit liegt darin, dass der zweite Energiespeicher 6 über einen zusätzlichen Gleichspannungswandler 10 direkt mit dem ersten Energiespeicher 5 verbindbar ist. Der zusätzliche Gleichspannungswandler ist im Vergleich zum Gleichspannungswandler 4 leistungsmäßig kleiner ausgelegt und damit kostengünstiger. Der zusätzliche Gleichspannungswandler 10 ist baulich in den zweiten Energiespeicher 5 integriert, so dass bei Aktivierung des zusätzlichen Gleichspannungswandlers 10 elektrische Energie, die im Energiespeicher 6 gespeichert ist, direkt am zweiten Energiespeicher auf die Nennspannung U1 heruntergewandelt wird und dann über die Leitungen 11 zum ersten Energiespeicher 5 transferiert werden kann, um diesen aufzuladen.

Gemäß dieser Variante erfolgt die Versorgung des ersten Teilnetzes im Fahrbetrieb auf die gleiche Weise wie in dem ersten Ausführungsbeispiel und in den Figuren 3A und 3B dargestellt. Die Wiederaufladung eines entladenen ersten Energiespeichers 5 im Nicht-Fahrbetrieb erfolgt jedoch nun gemäß der in Figur 5B gezeigten Variante.

Ergibt die Überwachung des Ladezustandes des ersten Energiespeichers 5 im Nicht-Fahrbetrieb, dass der Ladezustand des ersten Energiespeichers 5 unter den vorbestimmten Schwellenwert für den Mindestladezustand gefallen ist, wird ein Nachladevorgang gestartet. Hierbei wird der zusätzliche Gleichspannungswandler 10 aktiviert und der erste Energiespeicher 5 direkt mit Energie aus dem zweiten Energiespeicher 6 über die Leitungen 11 aufgeladen.

Gemäß dieser Variante müssen somit zum Nachladen des ersten Energiespeichers 5 der ersten Gleichspannungswandler und das zweite Teilnetz 3 nicht aktiviert werden, so dass die daran angeschlossenen Komponenten keinen Strom aufnehmen können.

Mittels des zweiten Gleichspannungswandlers 10 kann der erste Energiespeicher 5 direkt mit der niedrigen Spannung, z. B. 24 V, aus dem zweiten Energiespeicher 6 gespeist werden. Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Bordnetz
- 2: Erstes Teilbordnetz
- 3: Zweites Teilbordnetz
- 4: Gleichspannungswandler
- 5: Energiespeicher
- 6: Energiespeicher
- 7: Inverter
- 8: Elektrische Maschine
- 9: Elektrischer Verbraucher
- 10: Gleichspannungswandler
- 11: Steuereinheit
- 12: Steuerleitungen

## Patentansprüche

1. Verfahren zur Spannungsversorgung eines Bordnetzes (1) eines Kraftfahrzeugs, mit einem ersten Teilnetz (2), in dem eine erste Nennspannung (U1) anliegt und das einen ersten Energiespeicher (5) für elektrische Energie und einen durch mindestens einen Verbraucher (9) gebildeten Lastwiderstand umfasst, und einem zweiten Teilnetz (3), in dem eine zweite Nennspannung (U2) anliegt und das eine motorisch und generatorisch betreibbare elektrische Maschine (8) und einen zweiten Energiespeicher (6) für elektrische Energie umfasst, wobei das erste und zweite Teilnetz (2, 3) über einen ersten Gleichspannungswandler (4) miteinander gekoppelt sind, wobei das Verfahren die folgenden Schritte umfasst:
- im Fahrbetrieb, Versorgen des ersten Teilnetzes (2) mit Spannung aus dem zweiten Teilnetz (3) über den ersten Gleichspannungswandler (4), wobei der erste Energiespeicher (5) zur Abdeckung von Lastspitzen verwendet wird;
- im Nicht-Fahrbetrieb, Versorgen des ersten Teilnetzes (2) mit Spannung über den ersten Energiespeicher (5); und
- Nachladen des ersten Energiespeichers (5) mit Energie aus dem zweiten Energiespeicher (6) im Nicht-Fahrbetrieb, wobei das Nachladen des ersten Energiespeichers (5) periodisch erfolgt und/oder dann erfolgt, wenn ein überwachter Parameter, der ein Maß für den Ladezustand des ersten Energiespeichers (5) ist, ein Unterschreiten eines vorgegebenen Mindestladezustands des ersten Energiespeichers (5) anzeigt,
**dadurch gekennzeichnet, dass** zum Nachladen des ersten Energiespeichers (5) im Nicht-Fahrbetrieb der erste Gleichspannungswandler (4) und das zweite Teilnetz (3) für den Nachladevorgang aktiviert werden.

2. Verfahren nach Anspruch 1, **dadurch gekennzeichnet,**
(a) **dass** das Kraftfahrzeug ein Mildhybrid-, Hybrid-, oder ein Elektrofahrzeug ist und der zweite Energiespeicher (6) ein Traktionsenergiespeicher zur Versorgung der elektrische Maschine (8) ist; und/oder
(b) **dass** die erste Nennspannung (U1) 12 V oder 24 V ist und/oder dass die zweite Nennspannung (U2) größer als die erste Nennspannung (U1) ist; und/oder
(c) **dass** die Speicherkapazität des ersten Energiespeichers (5) kleiner als die des zweiten Energiespeichers (6) ist.

3. Verfahren nach einem der vorhergehenden Ansprüche, **dadurch gekennzeichnet, dass** der erste Energiespeicher (5) eine Blei-Säure-Batterie bzw. ein Bleiakkumulator, ein Ultracap-Speicher oder ein Li-Ionen-Akkumulator ist.

4. Kraftfahrzeug, insbesondere Nutzfahrzeug, aufweisend
(a) ein Bordnetz (1), mit einem ersten Teilnetz (2), in dem eine erste Nennspannung (U1) anliegt und das einen ersten Energiespeicher (5) für elektrische Energie und einen durch mehrere Verbraucher (9) gebildeten Lastwiderstand umfasst, und einem zweiten Teilnetz (3), in dem eine zweite Nennspannung (U2) anliegt und das eine motorisch und generatorisch betreibbare elektrische Maschine (8) und einen zweiten Energiespeicher (6) für elektrische Energie umfasst, wobei das erste und zweite Teilnetz (2, 3) über einen ersten Gleichspannungswandler (4) miteinander gekoppelt sind; und
(b) eine Steuereinrichtung (11), die eingerichtet ist, das Verfahren zur Spannungsversorgung eines Bordnetzes gemäß einem der Ansprüche 1 bis 3 auszuführen.

## Claims

1. Method for supplying voltage to a vehicle electrical system (1) of a motor vehicle, said vehicle electrical system having a first part network (2) in which a first nominal voltage (U1) prevails and that comprises a first energy storage device (5) for electrical energy and a load resistance that is formed by means of at least one consumer (9), and a second part network (3) in which a second nominal voltage (U2) prevails and that comprises an electrical machine (8) that can be operated in a motor mode and generator mode and a second energy storage device (6) for electrical energy, wherein the first and second part network (2, 3) are connected to one another by way of a first DC converter (4), wherein the method comprises the following steps:
- when the vehicle is in the driving operation, supplying the first part network (2) with voltage from the second part network (3) by way of the first DC converter (4), wherein the first energy storage device (5) is used to cover load peaks;
- when the vehicle is not in the driving operation, supplying the first part network (2) with voltage by way of the first energy storage device (5), and
- recharging the first energy storage device (5) with energy from the second energy storage device (6) when the vehicle is not in the driving operation, wherein the energy storage device (5) is recharged periodically and/or is then recharged if a parameter that is monitored and is a measurement for the state of charge of the first energy storage device (5) indicates the state of charge of the first energy storage device (5) is below a predetermined minimum state of charge,
**characterized in that** the first DC converter (4) and the second part network (3) are activated for the recharging process so as to recharge the first energy storage device (5) when the vehicle is not in the driving operation.

2. Method according to claim 1, **characterized in**
(a) **that** the motor vehicle is a mild hybrid, hybrid or an electric vehicle and the second energy storage device (6) is a traction energy storage device for supplying the electrical machine (8), and/or
(b) **that** the first nominal voltage (U1) is 12 V or 24 V and/or that the second nominal voltage (U2) is greater than the first nominal voltage (U1), and/or
(c) **that** the storage capacity of the first energy storage device (5) is smaller than that of the second energy storage device (6).

3. Method according to either one of the preceding claims, **characterized in that** the first energy storage device (5) is a lead acid battery or a lead acid rechargeable battery, an ultra-capacity storage device or a lithium ion rechargeable battery.

4. Motor vehicle, in particular a commercial vehicle comprising:
(a) a vehicle electrical system (1) having a first part network (2) in which a first nominal voltage (U1) prevails and that comprises a first energy storage device (5) for electrical energy and a load resistance that is formed by means of multiple consumers (9), and a second part network (3) in which a second nominal voltage (U2) prevails and that comprises an electrical machine (8) that can be operated in a motor mode and a generator mode and a second energy storage device (6) for electrical energy, wherein the first and second part network (2, 3) are connected to one another by way of a first DC converter (4), and
(b) a control device (11) that is configured so as to perform the method for supplying a vehicle electrical system according to any one of Claims 1 to 3.

## Revendications

1. Procédé d'alimentation électrique d'un réseau de bord (1) d'un véhicule automobile, comprenant un premier réseau partiel (2), dans lequel est appliquée une première tension nominale (U1) et qui comprend un premier accumulateur d'énergie (5) pour de l'énergie électrique et une résistance de charge formée par au moins un récepteur (9), et un deuxième réseau partiel (3), dans lequel est appliquée une deuxième tension nominale (U2) et qui comprend une machine électrique (8) pouvant fonctionner en moteur et en générateur et un deuxième accumulateur d'énergie (6) pour de l'énergie électrique, le premier et le deuxième réseau partiel (2, 3) étant connectés l'un à l'autre par le biais d'un premier convertisseur de tension continue (4), le procédé comprenant les étapes suivantes :
- en mode de déplacement, alimentation du premier réseau partiel (2) en tension depuis le deuxième réseau partiel (3) par le biais du premier convertisseur de tension continue (4), le premier accumulateur d'énergie (5) étant utilisé pour couvrir les pointes de charge ;
- en mode de non-déplacement, alimentation du premier réseau partiel (2) en tension par le biais du premier accumulateur d'énergie (5) ; et
- recharge du premier accumulateur d'énergie (5) avec de l'énergie depuis le deuxième accumulateur d'énergie (6) en mode de non-déplacement, la recharge du premier accumulateur d'énergie (5) s'effectuant périodiquement et/ou s'effectuant lorsqu'un paramètre de surveillance, qui est une mesure du niveau de charge du premier accumulateur d'énergie (5), indique un franchissement vers le bas d'un niveau de charge minimal prédéfini du premier accumulateur d'énergie (5),
**caractérisé en ce que** pour recharger le premier accumulateur d'énergie (5) en mode de non-déplacement, le premier convertisseur de tension continue (4) et le deuxième réseau partiel (3) sont activés pour l'opération de recharge.

2. Procédé selon la revendication 1, **caractérisé**
(a) **en ce que** le véhicule automobile est un véhicule semi-hybride, hybride ou électrique et le deuxième accumulateur d'énergie (6) est un accumulateur d'énergie de traction destiné à alimenter la machine électrique (8) ; et/ou
(b) **en ce que** la première tension nominale (U1) est de 12 V ou de 24 V et/ou en ce que la deuxième tension nominale (U2) est supérieure à la première tension nominale (U1) ; et/ou
(c) **en ce que** la capacité d'accumulation du premier accumulateur d'énergie (5) est inférieure à celle du deuxième accumulateur d'énergie (6).

3. Procédé selon l'une des revendications précédentes, **caractérisé en ce que** le premier accumulateur d'énergie (5) est une batterie au plomb-acide ou un accumulateur au plomb, un accumulateur à supercondensateur ou un accumulateur aux ions de lithium.

4. Véhicule automobile, notamment véhicule utilitaire, comprenant
(a) un réseau de bord (1), comprenant un premier réseau partiel (2), dans lequel est appliquée une première tension nominale (U1) et qui comprend un premier accumulateur d'énergie (5) pour de l'énergie électrique et une résistance de charge formée par plusieurs récepteurs (9), et un deuxième réseau partiel (3), dans lequel est appliquée une deuxième tension nominale (U2) et qui comprend une machine électrique (8) pouvant fonctionner en moteur et en générateur et un deuxième accumulateur d'énergie (6) pour de l'énergie électrique, le premier et le deuxième réseau partiel (2, 3) étant connectés l'un à l'autre par le biais d'un premier convertisseur de tension continue (4) ; et
(b) un dispositif de commande (11) qui est conçu pour mettre en oeuvre le procédé d'alimentation électrique d'un réseau de bord selon l'une des revendications 1 à 3.
